# EUROPEAN PATENT APPLICATION

(11) **EP 4 561 245 A1**
(43) Date of publication of application: **28.05.2025**
(21) Application number: 23841954.3
(22) Date of filing: 09.06.2023
(51) Int. Cl.: H04W 74/08

(54) **METHOD AND APPARATUS FOR DETERMINING NUMBER OF REPEATED TRANSMISSIONS, AND STORAGE MEDIUM**

(30) Priority: 22.07.2022 CN 202210868787
(71) Applicant: Datang Mobile Communications Equipment Co., Ltd., Beijing 100085 (CN)
(72) Inventor: ZHANG, Xiangdong, Beijing 100085 (CN); MIAO, Jinhua, Beijing 100085 (CN); FEI, Yongqiang, Beijing 100085 (CN); SUN, Jiancheng, Beijing 100085 (CN); XU, Meng, Beijing 100085 (CN)
(74) Representative: Studio Torta S.p.A.
(86) International application number: PCT/CN2023/099542
(87) International publication number: WO 2024/016888

(57) **Abstract**

The present disclosure provides a method for determining a number of repeated transmissions, an apparatus and a storage medium. The method includes: receiving first indication information, where the first indication information is used to indicate use of a first parameter to determine the number of repeated transmissions; determining a first number of repeated transmissions by using the first parameter. The first indication information is received, and according to the indication of the first indication information, the first number of repeated transmissions is determined by using the first parameter. Because the first parameter in the embodiments is a parameter set to meet greater coverage enhancement requirements, the first number of repeated transmissions determined by using the first parameter can ensure that repeated transmission requirements of an NTN network are met, thereby further ensuring greater coverage enhancement requirements of the NTN network.

## Description

The present disclosure claims priority to Chinese patent application No. 202210868787.8, filed to China National Intellectual Property Administration on July 22, 2022 and entitled "METHOD FOR DETERMINING NUMBER OF REPEATED TRANSMISSIONS, APPARATUS AND STORAGE MEDIUM", which is hereby incorporated by reference in its entirety.

### TECHNICAL FIELD

The present disclosure relates to the field of communication technologies and, in particular, to a method for determining a number of repeated transmissions, an apparatus and a storage medium.

### BACKGROUND

In order to achieve global radio access coverage, a non-terrestrial network (Non Terrestrial Network, NTN) architecture is proposed at present, which mainly relies on satellites to provide radio access services for a wide area under the satellites.

In a terrestrial network (Terrestrial Network, TN) network, coverage enhancement may be achieved, for example, through repeated transmission, for example, the number of repeated transmissions may be indicated for terminal devices in the TN network. However, because of a long propagation distance of a satellite system, a terminal device with the same power requires stronger coverage enhancement in the NTN network than in the TN network.

Therefore, current coverage enhancement methods in the TN network are difficult to meet coverage enhancement requirements in the NTN network.

### SUMMARY

The present disclosure provides a method for determining a number of repeated transmissions, an apparatus and a storage medium.

In a first aspect, an embodiment of the present disclosure provides a method for determining a number of repeated transmissions, including:
receiving first indication information, where the first indication information is used to indicate use of a first parameter to determine a number of repeated transmissions;
determining a first number of repeated transmissions by using the first parameter.

In an implementation, the first parameter includes a first set of repeated transmission times and/or a first list of repeated transmission times;
where the first set of repeated transmission times and/or the first list of repeated transmission times are set for a non-terrestrial network.

In an implementation, determining the first number of repeated transmissions by using the first parameter includes:
acquiring second indication information;
determining that in the first list of repeated transmission times, a number of repeated transmissions indicated by the second indication information is the first number of repeated transmissions.

In an implementation, the first parameter includes at least one offset value.

In an implementation, determining the first number of repeated transmissions by using the first parameter includes:
acquiring third indication information;
determining that in a second list of repeated transmission times, a number of repeated transmissions indicated by the third indication information is a candidate number of repeated transmissions, where the second list of repeated transmission times is set for a terrestrial network;
determining that a sum of the candidate number of repeated transmissions and a first offset value is the first number of repeated transmissions.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, receiving the first indication information includes:
receiving a first message, where the first message carries the first indication information;
where the first message is at least one of the following messages: a random access response message RAR, downlink control information DCI scrambled by a temporary cell radio network temporary identifier TC-RNTI.

In a second aspect, an embodiment of the present disclosure provides a method for determining a number of repeated transmissions, including:
sending first indication information, where the first indication information is used to indicate use of a first parameter to determine a number of repeated transmissions;
where the first parameter is used to determine a first number of repeated transmissions.

In an implementation, the first parameter includes a first set of repeated transmission times and/or a first list of repeated transmission times;
where the first set of repeated transmission times and/or the first list of repeated transmission times are set for a non-terrestrial network.

In an implementation, the method further includes:
sending second indication information, where a number of repeated transmissions in the first list of repeated transmission times indicated by the second indication information is the first number of repeated transmissions.

In an implementation, the first parameter includes at least one offset value.

In an implementation, the method further includes:
sending third indication information, where a number of repeated transmissions in the second list of repeated transmission times indicated by the third indication information is a candidate number of repeated transmissions, and the second list of repeated transmission times is set for a terrestrial network;
where the first number of repeated transmissions is a sum of the candidate number of repeated transmissions and a first offset value.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, sending the first indication information includes:
sending a first message, where the first message carries the first indication information;
where the first message is at least one of the following messages: a random access response message RAR, downlink control information DCI scrambled by a temporary cell radio network temporary identifier TC-RNTI.

In a third aspect, an embodiment of the present disclosure provides a terminal device, including a memory, a transceiver, and a processor:
where the memory is configured to store a computer program; the transceiver is configured to transceive data under control of the processor; the processor is configured to read the computer program in the memory and perform the following operations:
receiving first indication information, where the first indication information is used to indicate use of a first parameter to determine a number of repeated transmissions;
determining a first number of repeated transmissions by using the first parameter.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processor is specifically configured to perform the following operations:
acquiring second indication information;
determining that in the first list of repeated transmission times, a number of repeated transmissions indicated by the second indication information is the first number of repeated transmissions.

In an implementation, the first parameter includes at least one offset value.

In an implementation, the processor is specifically configured to perform the following operations:
acquiring third indication information;
determining that in a second list of repeated transmission times, a number of repeated transmissions indicated by the third indication information is a candidate number of repeated transmissions, where the second list of repeated transmission times is set for a terrestrial network;
determining that a sum of the candidate number of repeated transmissions and a first offset value is the first number of repeated transmissions.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the processor is specifically configured to perform the following operations:
receiving a first message, where the first message carries the first indication information;
where the first message is at least one of the following messages: a random access response message RAR, downlink control information DCI scrambled by a temporary cell radio network temporary identifier TC-RNTI.

In a fourth aspect, an embodiment of the present disclosure provides a network device, including a memory, a transceiver, and a processor;
where the memory is configured to store a computer program; the transceiver is configured to transceive data under control of the processor; the processor is configured to read the computer program in the memory and perform the following operations:
sending first indication information, where the first indication information is used to indicate use of a first parameter to determine a number of repeated transmissions;
where the first parameter is used to determine a first number of repeated transmissions.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processor is further configured to perform the following operations:
sending second indication information, where a number of repeated transmissions in the first list of repeated transmission times indicated by the second indication information is the first number of repeated transmissions.

In an implementation, the first parameter includes at least one offset value.

In an implementation, the processor is further configured to perform the following operations:
sending third indication information, where a number of repeated transmissions in the second list of repeated transmission times indicated by the third indication information is a candidate number of repeated transmissions, and the second list of repeated transmission times is set for a terrestrial network;
where the first number of repeated transmissions is a sum of the candidate number of repeated transmissions and a first offset value.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the processor is specifically configured to perform the following operations:
sending a first message, where the first message carries the first indication information;
where the first message is at least one of the following messages: a random access response message RAR, downlink control information DCI scrambled by a temporary cell radio network temporary identifier TC-RNTI.

In a fifth aspect, an embodiment of the present disclosure provides an apparatus for determining a number of repeated transmissions, including:
a receiving unit, configured to receive first indication information, where the first indication information is used to indicate use of a first parameter to determine a number of repeated transmissions;
a processing unit, configured to determine a first number of repeated transmissions by using the first parameter.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processing unit is specifically configured to:
acquire second indication information;
determine that in the first list of repeated transmission times, a number of repeated transmissions indicated by the second indication information is the first number of repeated transmissions.

In an implementation, the first parameter includes at least one offset value.

In an implementation, the processing unit is specifically configured to:
acquire third indication information;
determine that in a second list of repeated transmission times, a number of repeated transmissions indicated by the third indication information is a candidate number of repeated transmissions, where the second list of repeated transmission times is set for a terrestrial network;
determine that a sum of the candidate number of repeated transmissions and a first offset value is the first number of repeated transmissions.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the receiving unit is specifically configured to:
receive a first message, where the first message carries the first indication information;
where the first message is at least one of the following messages: a random access response message RAR, downlink control information DCI scrambled by a temporary cell radio network temporary identifier TC-RNTI.

In a sixth aspect, an embodiment of the present disclosure provides an apparatus for determining a number of repeated transmissions, including:
a sending unit, configured to send first indication information, where the first indication information is used to indicate use of a first parameter to determine a number of repeated transmissions;
where the first parameter is used to determine a first number of repeated transmissions.

In an implementation, the first parameter includes a first set of repeated transmission times and/or a first list of repeated transmission times;
where the first set of repeated transmission times and/or the first list of repeated transmission times are set for a non-terrestrial network.

In an implementation, the sending unit is further configured to:
send second indication information, where a number of repeated transmissions in the first list of repeated transmission times indicated by the second indication information is the first number of repeated transmissions.

In an implementation, the first parameter includes at least one offset value.

In an implementation, the sending unit is further configured to:
send third indication information, where a number of repeated transmissions in the second list of repeated transmission times indicated by the third indication information is a candidate number of repeated transmissions, and the second list of repeated transmission times is set for a terrestrial network;
where the first number of repeated transmissions is a sum of the candidate number of repeated transmissions and a first offset value.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the sending unit is specifically configured to:
send a first message, where the first message carries the first indication information;
where the first message is at least one of the following messages: a random access response message RAR, downlink control information DCI scrambled by a temporary cell radio network temporary identifier TC-RNTI.

In a seventh aspect, the present disclosure provides a computer-readable storage medium, where the computer-readable storage medium stores a computer program, and the computer program is configured to cause a computer to execute the method according to the first aspect or the second aspect.

The present disclosure provides a method for determining the number of repeated transmissions, the apparatus and the storage medium. In the method, the first indication information is received by the terminal device, and according to an indication of the first indication information, the first number of repeated transmissions is determined by using the first parameter. Because the first parameter in the embodiments is a parameter set to meet greater coverage enhancement requirements, the first number of repeated transmissions determined by using the first parameter can ensure that repeated transmission requirements of an NTN network are met, thereby further ensuring greater coverage enhancement requirements of the NTN network.

It should be understood that the content described in the SUMMARY section is not intended to limit essential or important features of the embodiments of the present invention, nor is it intended to limit the scope of the present invention. Other features of the present invention will be readily understood from the following description.

### BRIEF DESCRIPTION OF THE DRAWINGS

In order to explain technical solutions in the present disclosure or in the prior art more clearly, drawings required to be used in the description of embodiments or the prior art will be introduced briefly in the following. It is obvious that the drawings in the following description are some embodiments of the present invention. For those ordinarily skilled in the art, other drawings may also be obtained based on these drawings without creative efforts.
FIG. 1 is a schematic architecture diagram of a communication system provided by an embodiment of the present disclosure.
FIG. 2 is a schematic flowchart of a 4-step RACH provided by an embodiment of the present disclosure.
FIG. 3 is a flowchart of a method for determining a number of repeated transmissions provided by an embodiment of the present disclosure.
FIG. 4 is a schematic implementation diagram I for determining a number of repeated transmissions provided by an embodiment of the present disclosure.
FIG. 5 is a schematic implementation diagram II for determining a number of repeated transmissions provided by an embodiment of the present disclosure.
FIG. 6 is a schematic implementation diagram III for determining a number of repeated transmissions provided by an embodiment of the present disclosure.
FIG. 7 is a schematic implementation diagram IV for determining a number of repeated transmissions provided by an embodiment of the present disclosure.
FIG. 8 is a schematic implementation diagram of a first message carrying first indication information provided by an embodiment of the present disclosure.
FIG. 9 is a schematic structural diagram of a terminal device provided by an embodiment of the present disclosure.
FIG. 10 is a schematic structural diagram of a network device provided by an embodiment of the present disclosure;
FIG. 11 is a schematic structural diagram I of an apparatus for determining a number of repeated transmissions provided by an embodiment of the present disclosure.
FIG. 12 is a schematic structural diagram II of an apparatus for determining a number of repeated transmissions provided by an embodiment of the present disclosure.

### DESCRIPTION OF EMBODIMENTS

In the embodiments of the present invention, the term "and/or" describes an association relationship of associated objects, and means that there may be three types of relationships. For example, "A and/or B" may represent situations, namely, A exists alone, A and B exist at the same time, and B exists alone. The character "/" generally means that the associated objects before and after the character are of an "or" relationship.

In the embodiments of the present disclosure, the term "multiple" refers to two or more, and other quantifiers are similar.

The technical solutions in the embodiments of the present disclosure will be described clearly and comprehensively in combination with accompanying drawings in the embodiments of the present disclosure. Obviously, the described embodiments are only part of the embodiments of the present disclosure, not all of them. All other embodiments obtained by those ordinarily skilled in the art based on the embodiments of the present disclosure without creative efforts fall within the protection scope of the present disclosure.

The embodiments of the present disclosure provide a beam indication method and an apparatus, which are used to reduce a time delay of beam update. The method and the apparatus are based on a same application concept. Since the method and the apparatus solve the problem with similar principles, cross reference can be made to the apparatus and the method, and the description is not repeated here.

The technical solutions provided by the embodiments of the present disclosure can be applied to various systems, especially a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. Each of the various systems includes a terminal device and a network device. The system may also include a core network part, such as an evolved packet system (Evloved Packet System, EPS), a 5G system (5GS), etc.

The terminal device involved in the embodiments of the present disclosure may refer to a device that provides voice and/or data connectivity to a user, a handheld device with a wireless connection function, or other processing devices connected to a wireless modem, etc. The terminal device may vary in name among different systems. For example, in the 5G system, the terminal device may be called a user equipment (User Equipment, UE). A wireless terminal device may communicate with one or more core networks (Core Network, CN) via a radio access network (Radio Access Network, RAN). The wireless terminal device may be a mobile terminal device, such as a mobile phone (or "cellular" phone) and a computer with a mobile terminal device. For example, the mobile terminal device may be portable, pocket-sized, handheld, computer built-in or vehicle-mounted mobile apparatuses, which exchange language and/or data with the radio access network, such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

The network device involved in the embodiments of the present disclosure may be a base station, and the base station may include multiple cells providing services for terminals. Depending on a specific application, the base station may also be called an access point, or a device in an access network that communicates with a wireless terminal device through one or more sectors over an air interface, or other names. The network device may be configured to exchange a received over-the-air frame with an Internet protocol (Internet Protocol, IP) packet, and act as a router between the wireless terminal device and the rest of the access network, where the rest of the access network may include an Internet protocol (IP) communication network. The network device may also coordinate property management of the air interface. For example, the network device involved in the embodiments of the present disclosure may be a network device (Base Transceiver Station, BTS) in a global system for mobile communications (Global System for Mobile communications, GSM) or code division multiple access (Code Division Multiple Access, CDMA), or a network device (NodeB) in wide-band code division multiple access (Wide-band Code Division Multiple Access, WCDMA), or an evolutional network device (evolutional Node B, eNB or e-NodeB) in a long term evolution (long term evolution, LTE) system, a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

One or more antennas may be used by the network device and the terminal device respectively for multi input multi output (Multi Input Multi Output, MIMO) transmission therebetween, and the MIMO transmission may be single user MIMO (Single User MIMO, SU-MIMO) or multiple user MIMO (Multiple User MIMO, MU-MIMO). Depending on the morphology and number of root antenna combinations, the MIMO transmission may be 2D-MIMO, 3D-MIMO, FD-MIMO or massive-MIMO, and may also be diversity transmission or precoding transmission or beamforming transmission, etc.

In order to better understand technical solutions of the present disclosure, related technologies involved in the present disclosure are further introduced in detail below.

In order to achieve global radio access coverage, a non-terrestrial network (Non Terrestrial Network, NTN) architecture is proposed at present, in which a non-terrestrial network is described compared to a traditional terrestrial network as the name implies, and adopts typical technologies such as satellites and high-altitude platforms (HAP: satellites and High-AlTItude Platforms) to participate in network deployment.

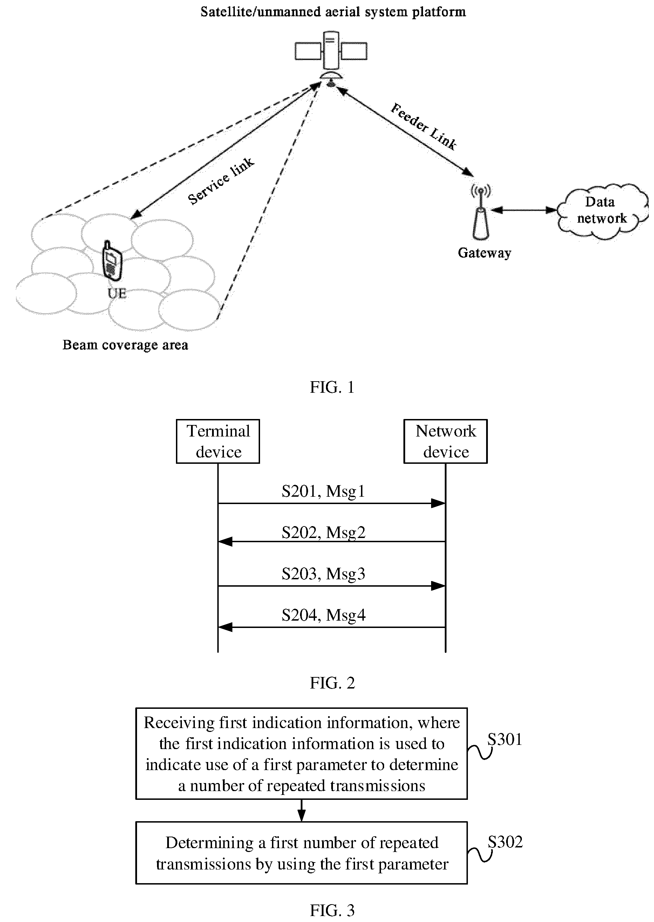

A communication scenario of the present disclosure will be described below with reference to FIG. 1, and FIG. 1 is a schematic architecture diagram of a communication system provided by an embodiment of the present disclosure.

As shown in FIG. 1, a satellite (Satellite)/unmanned aerial system (unmanned Aerial system, UAS for short) platform (platform) is connected to a gateway (gateway) through a feeder link (Feeder Link), and the gateway is connected to a data network (Data Network). The feeder link may also be referred to as a feeder circuit.

The satellite/unmanned aerial system platform sends beams to the ground to form a beam coverage area (Beam Footprint), and each elliptical area corresponds to a beam coverage area. UEs in a beam coverage area may communicate data with the satellite/unmanned aerial system through a service link (Service Link).

In satellite communication, there are two operation modes, namely, a transparent forwarding mode and a regenerative communication mode, which are described separately below.

In the transparent forwarding mode, a satellite only transparently forwards a signal without any processing, and a terminal communicates with a gateway, that is, the satellite only performs operations such as frequency conversion and wireless signal amplification on an uplink/downlink signal, and it is functionally similar to a radio frequency relay.

In the regenerative communication mode, a satellite may detect information of a received signal, perform processing and forwarding, complete functions of a base station and connect a terminal and a gateway. That is, the satellite may perform functions such as frequency conversion, wireless signal amplification, encoding/modulation, demodulation/decoding on an uplink/downlink signal. That is, the satellite may have all or part of functions of the gNB and may regenerate a signal.

Based on the above introduction, relevant implementations of coverage enhancement of the NTN network and the TN network are introduced below.

At present, coverage enhancement for the TN network is implemented based on Rel-17 NR coverage enhancement (coverage enhancement). However, there is no explicit solution for implementation of coverage enhancement for the NTN. At present, it may be considered to be implemented based on research results of the NR coverage enhancement project of Rel-17, which mainly considers coverage enhancement technologies related to a long propagation delay and satellite movement.

The following attempts to describe the coverage enhancement project of Rel-17. Before the introduction, since the following contents relate to related implementations of a random access procedure, the random access procedure is introduced first.

The random access may include four-step random access (which may also be referred to as a four-step random access channel, or, which may also be abbreviated as a 4-step RACH) and two-step random access (which may also be referred to as a two-step random access channel, or, which may also be abbreviated as a 2-step RACH). The process of the 4-step RACH will be described in detail hereinafter.

FIG. 2 is a schematic flowchart of a 4-step RACH provided by an embodiment of the present disclosure. The 4-step RACH has been defined in detail in the existing protocol TS38.300, and only brief description is made in the present disclosure. Referring to FIG. 2, the method may include the following steps.

S201: a terminal device sends an Msg1 to a network device.

The Msg1 (Message1, message1) may also be referred to as msg1 or MSG1.

The Msg1 is used to transmit a random access preamble, and the random access preamble may also be referred to as a random access preamble sequence, or a preamble, or a preamble sequence.

In the embodiments of the present disclosure, a preamble and a time-frequency resource (RACH Occasion, RO for short, random access channel occasion) occupied by sending the preamble are referred to as physical random access channel (physical random access channel, PRACH) resources.

Optionally, the terminal device may select an RO and a preamble, and send the selected preamble on the selected RO. If the random access manner is non-contention based random access, a base station may designate a PRACH resource and/or a preamble, and the base station may estimate a timing advance (timing advance, TA) based on the preamble sent by the terminal device, and an uplink grant size required by the terminal device to transmit an Msg3.

For example, the network device may broadcast available PRACH resources through system information.

S202: the network device sends an Msg2 to the terminal device.

The Msg2 (Message2, message2) may also be referred to as msg2 or MSG2.

The Msg2 includes time-frequency resources determined by the network device to be used by the terminal device for sending a payload (payload).

After sending the Msg1, the terminal device may start a random access response time window (ra-Response Window), and monitor, in the random access response time window, a physical downlink control channel (physical downlink control channel, PDCCH) scrambled by a random access radio network temporary identifier (random access radio network temporary identifier, RA-RNTI).

The RA-RNTI is related to the PRACH time-frequency resource used by the terminal device to send the Msg1.

After the terminal device successfully receives the PDCCH scrambled by the RA-RNTI, the terminal device may obtain a physical downlink shared channel (physical downlink shared channel, PDSCH) scheduled by the PDCCH, which includes a random access response (random access response, RAR). The RAR may include the following information:
a sub-header of the RAR including a back-off indicator (back-off indicator, BI), used for indicating a back-off time for retransmitting the Msg1;
RAPID in the RAR: the network responds to a received preamble index;
a payload of the RAR including a timing advance group (timing advance group, TAG), used for adjusting uplink timing;
an up link (up link, UL) grant: used for scheduling an uplink resource indication of the Msg3;
a temporary cell radio network temporary identifier (temporary cell radio network temporary identifier, TC-RNTI): used for scrambling a PDCCH for scheduling retransmission of an Msg4 and an Msg3.

If the terminal receives the PDCCH scrambled by the RAR-RNTI, and the RAR includes the preamble index sent by itself, the terminal considers that the random access response is received successfully.

For non-contention based random access, after the terminal successfully receives the Msg2, the random access procedure ends. For contention-based random access, after successfully receiving the Msg2, the terminal device further needs to proceed with transmission of the Msg3 and reception of the Msg4.

S203: the terminal device sends the Msg3 to the network device.

The Msg3 (Message3, message3) may also be referred to as msg3 or MSg3.

The Msg3 is a first scheduled transmission in the random access procedure, for sending the payload (payload), such as an RRC connection request message, a tracking area update message, etc.

The Msg3 may inform the network device of what event triggers the RACH process. For example, if in case of an initial random access process, the Msg3 may carry a UE ID and an establishment cause (establishment cause); if in case of an RRC reestablishment, the Msg3 may carry a connected state UE identifier and an establishment cause (establishment cause).

It should be noted that if different terminal devices select a same preamble in S301 and send the preamble on a same time-frequency resource, the different terminal devices send payloads on the same time-frequency resource, thereby causing resource usage conflicts.

S204: the network device sends the Msg4 to the terminal device.

The Msg4 (Message4, message4) may also be referred to as msg4 or MSG4.

The Msg4 is used to indicate whether the terminal device successfully accesses the network device.

The Msg4 may have the following two functions: one is to solve a contention conflict. The other is that the network device transmits an RRC configuration message to the terminal device. The contention conflict may be solved in the following two ways: one is that if the terminal device carries a C-RNTI in the Msg3, the Msg4 is scheduled by using a PDCCH scrambled by the C-RNTI; the other is that if the terminal device does not carry a C-RNTI in the Msg3, for example, in case of an initial access, the Msg4 is scheduled by using a PDCCH scrambled by a TC-RNTI. The conflict resolution is that the terminal device receives a PDSCH of the Msg4 by matching a common control channel (common control channel, CCCH) service data unit (service data unit, SDU) in the PDSCH.

On the basis of the random access procedure introduced above, the coverage enhancement project of Rel-17 is introduced below.

The coverage enhancement may be achieved through repeated transmission. In the random access procedure, the maximum number of repeated transmissions supported is 16 for the PUSCH of the Msg3. The PUSCH of the Msg3 includes an initial transmission scheduled by the RAR and a retransmission scheduled by the TC-RNTI.

When indicating the number of repeated transmissions of the PUSCH of the Msg3, a current implementation is to configure four possible numbers of repeated transmissions in RRC signaling, and then to indicate which one of the above configured numbers of repeated transmissions is used in the RAR or DCI scrambled by the TC-RNTI, to complete the determination of the number of repeated transmissions of the PUSCH of the Msg3.

The "configuring four possible numbers of repeated transmissions in RRC signaling" is specifically as follows.

First, all possible numbers of repeated transmissions are configured or specified, for example, all possible numbers of repeated transmissions may include: 1, 2, 3, 4, 7, 8, 12, 16, which may be configured or specified in the following manner:

| | |
|---|---|
| NumberOfMsg3-Repetitions-r17::= | ENUMERATED{n1, n2, n3, n4, n7, n8, n12, n16} |

Then, four of the above possible numbers of repeated transmissions are selected as the numbers of repeated transmissions that may be used for the PUSCH of the Msg3, which may be configured, for example, in the following manner:

| | |
|---|---|
| numberOfMsg3-RepetitionsList-r17 | SEQUENCE (SIZE (4)) OF NumberOfMsg3- |
| Repetitions-r17 | |

A specific implementation of "indicating which one of the above configured numbers of repeated transmissions is used in the RAR or DCI scrambled by the TC-RNTI" may be as follows.

Which value in the numberOfMsg3-RepetitionsList-r17 is used is indicated through two most significant bits (2 MSBs) of an MCS (Modulation and Coding Scheme, modulation and coding scheme) carried in the RAR or the DCI scrambled by the TC-RNTI.

The two most significant bits of MCS may be any of the following: 00, 01, 10 and 11. For example:
when the two most significant bits of the MCS are 00, an indication is given to use the first value in the numberOfMsg3-RepetitionsList-r17;
when the two most significant bits of the MCS are 01, an indication is given to use the second value in the numberOfMsg3-RepetitionsList-r17;
when the two most significant bits of the MCS are 10, an indication is given to use the third value in the numberOfMsg3-RepetitionsList-r17;
when the two most significant bits of the MCS are 11, an indication is given to use the fourth value in the numberOfMsg3-RepetitionsList-r17.

For example, the value of the numberOfMsg3-RepetitionsList-r1 is {n1,n4,n8,n16}, that is, four numbers of repeated transmissions, namely 1, 4, 8 and 16, are selected among the multiple repeated transmission times.

Assuming that the value of 2 MSBs of the MCS in the RAR or the DCI scrambled by the TC-RNTI is 01, it may be determined that a current indication to use the second value in the numberOfMsg3-RepetitionsList-r17 is given. That is, the actual number of repeated transmissions is configured for the Msg3 as 4.

On the basis of the above introduction, it should be noted here that, based on the characteristics of a long propagation distance of a satellite system, a UE with the same transmission power may require stronger coverage enhancement in an NTN network than in a TN network. For example, a UE1 and a UE2 currently exist, assuming that the UE1 and the UE2 have the same surrounding environment, for example, being in a basement or an enclosed space, the UE1 accesses the TN, and the UE2 accesses the NTN, then the coverage enhancement requirements needed by the UE2 are larger than the coverage enhancement requirements needed by the UE1.

Therefore, the coverage enhancement methods currently used in the TN network (that is, the related implementations of the coverage enhancement project of Rel-17 introduced above) may be difficult to meet the coverage enhancement requirements in the NTN network.

Based on the problems in the prior art, the following technical concept is proposed in the present disclosure: introducing a specific number of repeated transmissions for the NTN network, or introducing an offset value for the NTN network based on the related implementations of the number of repeated transmissions currently configured, to ensure that the determined number of repeated transmissions can meet the coverage enhancement requirements of the NTN network.

The method for determining the number of repeated transmissions provided by the present disclosure is introduced below in conjunction with specific embodiments. FIG. 3 is a flowchart of a method for determining a number of repeated transmissions provided by an embodiment of the present disclosure.

As shown in FIG. 3, the method includes the following steps.

S301: receiving first indication information, where the first indication information is used to indicate use of a first parameter to determine a number of repeated transmissions.

In this embodiment, a terminal device may receive the first indication information from a network device, and the first indication information may give an indication to the terminal device to determine the number of repeated transmissions by using the first parameter. The first parameter may be understood as a parameter set to meet the number of repeated transmissions larger than the existing number of repeated transmissions.

In a possible implementation, the first indication information is used to indicate use of the first parameter to determine the number of repeated transmissions, specifically: the first indication information has two states, where a first state of the first indication information indicates use of the first parameter to determine the number of repeated transmissions, and a second state of the first indication information indicates no use of the first parameter to determine the number of repeated transmissions. Then, receiving the first indication information, where the first indication information is used to indicate use of the first parameter to determine the number of repeated transmissions specifically is: receiving the first indication information, where the first state of the first indication information is used to indicate use of the first parameter to determine the number of repeated transmissions. For example, the first indication information is a 1-bit information bit, when the bit information bit is set to 1, it represents the first state of the first indication information; and when the bit information bit is set to 0, it represents the second state of the first indication information. Or, when the bit information bit is set to 0, it represents the first state of the first indication information; and when the bit information bit is set to 1, it represents the second state of the first indication information.

In a possible implementation, the first parameter in this embodiment may include a set of repeated transmission times and/or a list of repeated transmission times that are newly set. Or, the first parameter in this embodiment may also include at least one offset value, to ensure that on the basis of the existing number of repeated transmissions, a larger number of repeated transmissions relative to the existing number of repeat transmissions can be effectively determined based on the first parameter, to meet the requirements of greater coverage enhancement of the NTN network. The existing number of repeated transmissions may be understood as the number of repeated transmissions already supported in the TN network.

Or, the first parameter may also be any parameter that can satisfy a larger number of repeated transmissions, and the specific implementation of the first parameter is not limited in the embodiments.

S302: determining a first number of repeated transmissions by using the first parameter.

After receiving the first indication information, the terminal device uses the first parameter to determine the first number of repeated transmissions according to the first indication information. If the first indication information includes two states, and the first state of the first indication information indicates use of the first parameter to determine the number of repeated transmissions, using the first parameter to determine the first number of repeated transmissions according to the first indication information specifically is, if the first indication information is in the first state, using the first parameter to determine the first number of repeated transmissions; otherwise, if the first indication information is in the second state, not using the first parameter to determine the first number of repeated transmissions.

The first number of repeated transmissions may be understood as the number of repeated transmissions of first information. The first information, for example, may be the PUSCH of the Msg3 described above, or may be any information that needs to be repeatedly transmitted. The embodiments do not limit the specific content that needs to be repeatedly transmitted.

The method for determining the number of repeated transmissions provided by the embodiments of the present disclosure includes: receiving the first indication information, where the first indication information is used to indicate use of the first parameter to determine the number of repeated transmissions, determining the first number of repeated transmissions by using the first parameter. the first indication information is received, and according to the indication of the first indication information, the first number of repeated transmissions is determined using the first parameter, because the first parameter in the embodiments is a parameter set to meet greater coverage enhancement requirements, the first number of repeated transmissions determined by using the first parameter can ensure that repeated transmission requirements of an NTN network are met, thereby further ensuring greater coverage enhancement requirements of the NTN network.

On the basis of the above introduction, it can be understood that the first parameter in the embodiments has a plurality of possible implementations, and the implementations of determining the first number of repeated transmissions under various possible implementations of the first parameter are described in detail below.

In a possible implementation, the first parameter may include a first set of repeated transmission times and/or a first list of repeated transmission times.

The first set of repeated transmission times may be understood as a newly defined set of repeated transmission times, and the "newly defined" here is relative to the existing second set of repeated transmission times.

For example, the first set of repeated transmission times may be referred to as NumberOfMsg3-Repetitions- NTN, and the first set of repeated transmission times includes multiple repeated transmission times, where the multiple repeated transmission times are all possible numbers of repeated transmissions newly configured.

NumberOfMsg3-Repetitions-r17 exists in the protocol itself, which is referred to herein as a second set of repeated transmission times, and the second set of repeated transmission times includes all possible numbers of repeated transmissions that are currently configured.

It can be understood that because the purpose of setting the first parameter is to meet greater coverage enhancement requirements, the number of repeated transmissions in the first set of repeated transmission times may be larger than the number of repeated transmissions in the second set of repeated transmission times. Or, the number of repeated transmissions in the first set of repeated transmission times at least cannot be all less than or equal to the number of repeated transmissions in the second set of repeated transmission times.

For example, the case may be that the smallest number of repeated transmissions in the first set of repeated transmission times may be greater than the largest number of repeated transmissions in the second set of repeated transmission times. Or the case may also be that the largest number of repeated transmissions in the first set of repeated transmission times is greater than the largest number of repeated transmissions in the second set of repeated transmission times.

Examples can be given here. For example, the first set of repeated transmission times may include the following numbers of repeated transmissions: 20, 24, 28, 32, 40, 48, 52, 60, 64. Then a configuration implementation of the first set of repeated transmission times may be, for example:

| | |
|---|---|
| NumberOfMsg3-Repetitions-NTN::= | ENUMERATED {n20, n24, n28, n32, n40, n48, |
| n52, n60, n64}. | |

Then, based on the NumberOfMsg3-Repetitions-r17 introduced above, it can be determined that the smallest number of repeated transmissions in the first set of repeated transmission times, i.e., 20, is also greater than the largest number of repeated transmissions in the second set of repeated transmission times, i.e., 16.

In the practical implementation process, the specific implementation of the number of repeated transmissions included in the first set of repeated transmission times may be selected and set according to practical requirements, as long as a larger number of repeated transmissions than the existing number of repeated transmissions can be provided.

The first list of repeated transmission times may be understood as a newly defined list of repeated transmission times, and the "newly defined" here is also relative to the existing second list of repeated transmission times.

The first list of repeated transmission times actually includes multiple repeated transmission times selected from the first set of repeated transmission times, and the first list of repeated transmission times includes the selected repeated transmission times that may be used to meet the greater repeated transmission requirements currently.

For example, the first list of repeated transmission times may be referred to as numberOfMsg3-RepetitionsList- NTN, which may be expressed as:

| | |
|---|---|
| numberOfMsg3-RepetitionsList-NTN | SEQUENCE (SIZE (4)) OF NumberOfMsg3- |
| Repetitions-NTN. | |

In a possible example, the first list of repeated transmission times may be equal to {n20, n32, n48, n64}, which means that four numbers of repeated transmissions, namely 20, 32, 48 and 64, are selected from the first set of repeated transmission times.

In the practical implementation process, the repeated transmission times included in the first list of repeated transmission times may be selected according to practical requirements, as long as the repeated transmission times in the first list of repeated transmission times are selected from the first set of repeated transmission times.

It should be further noted herein that the first set of repeated transmission times and the first list of repeated transmission times included in the first parameter are in a "and/or" relationship.

Therefore, in a possible implementation, the first parameter may only include the first set of repeated transmission times, then for example, the list of repeated transmission times still reuses the existing second list of repeated transmission times numberOfMsg3-RepetitionsList-r17.

In this case, when there are greater coverage enhancement requirements, for example, multiple repeated transmission times may be selected from the first set of repeated transmission times to obtain the second list of repeated transmission times, and then the number of repeated transmissions may be determined in the second list of repeated transmission times. At this time, the second set of repeated transmission times may be understood as the first set of repeated transmission times.

In another possible implementation, the first parameter may also include only the first list of repeated transmission times, for example, the set of repeated transmission times still adopts the existing second set of repeated transmission times NumberOfMsg3-Repetitions-r17.

In this case, for example, the number of repeated transmissions included in the second set of repeated transmission times may be expanded, so that the second set of repeated transmission times includes a larger number of repeated transmissions on the basis of the existing number of repeated transmissions. Then when there are greater coverage enhancement requirements, for example, multiple larger numbers of repeated transmissions may be selected from the second set of repeated transmission times to obtain the first list of repeated transmission times, and then the number of repeated transmissions may be determined in the first list of repeated transmission times. At this time, the expanded second set of repeated transmission times may be understood as the first set of repeated transmission times.

In another possible implementation, the first parameter may also include both the first list of repeated transmission times and the first set of repeated transmission times.

In this case, when there are greater coverage enhancement requirements, multiple repeated transmission times may be selected from the first set of repeated transmission times to obtain the first list of repeated transmission times, and then the number of repeated transmissions may be determined in the first list of repeated transmission times.

In a possible understanding manner, the first set of repeated transmission times and the first list of repeated transmission times in this embodiment may also be understood as being set for the NTN network. That is, the set of repeated transmission times and the list of repeated transmission times are specially set for the NTN network, to ensure that the greater coverage enhancement requirements of the NTN network are met.

However, with respect to such understanding manner, it should be further noted that in a scenario of the TN network, if the terminal device has greater coverage enhancement requirements, the first set of repeated transmission times and/or the first list of repeated transmission times may also be used in the TN network to determine a larger number of repeated transmissions.

The second set of repeated transmission times and the second list of repeated transmission times in the embodiments may also be understood as being set for the TN network. However, similarly, in a scenario of the NTN network, if coverage enhancement requirements of the terminal device are not large, the second set of repeated transmission times and/or the second list of repeated transmission times may also be used in the NTN network to determine an appropriate number of repeated transmissions.

In a possible implementation, the first set of repeated transmission times and the first list of repeated transmission times described above may be determined by the network device and sent to the terminal device.

For example, the network device may send the first set of repeated transmission times and the first list of repeated transmission times introduced above to terminal devices in all NTN cells, or, the terminal device may also send the first set of repeated transmission times and the first list of repeated transmission times introduced above only to terminal devices in NTN cells that support greater coverage enhancement requirements, or, the network device may also send the first set of repeated transmission times and the first list of repeated transmission times introduced above to terminal devices in TN cells that support greater coverage enhancement requirements, and the specific sending manner may depend on the specific implementation of the network device, which is not limited in the embodiments. Optionally, for example, the first set of repeated transmission times is specified by a protocol and does not need to be sent to the terminal device by the network.

The first set of repeated transmission times and/or the first list of repeated transmission times may be sent in NTN-specific system information (such as SIB 19), where an SIB is a system information block (system information block). In the practical implementation process, the NTN-specific system information may also be expanded and implemented with the development of technologies.

It should be noted that the second set of repeated transmission times and the second list of repeated transmission times set for R17 are normally configured through BWP-UplinkCommon (bandwidth part-uplink common).

Based on the content described above, it can be determined that if the first parameter includes the first set of repeated transmission times, then the protocol includes two sets of repeated transmission times, namely the first set of repeated transmission times NumberOfMsg3-Repetitions-NTN and the second set of repeated transmission times NumberOfMsg3-Repetitions-r17.

And, if the first parameter includes the first list of repeated transmission times, the protocol includes two lists of repeated transmission times, namely the first list of repeated transmission times numberOfMsg3-RepetitionsList -NTN and the second list of repeated transmission times numberOfMsg3-RepetitionsList-R17.

Similar to the above introduction, the network device may also indicate which number of repeated transmissions in the list of repeated transmission times is adopted through the two most significant bits of the MCS carried in the RAR or the DCI scrambled by the TC-RNTI, but because there are currently two lists of repeated transmission times, it is necessary to give a further indication to the terminal device about which list of repeated transmission times is adopted to determine the number of repeated transmissions.

In a possible implementation, the network device may determine whether the terminal device needs a larger number of repeated transmissions to transmit the Msg3, and if so, the network device may send the first indication information to the terminal device, and the first indication information indicates use of the first set of repeated transmission times and the first list of repeated transmission times by the terminal device to determine the first number of repeated transmissions. Or, the network device may send the first state of the first indication information to the terminal device, and the first state of the first indication information indicates use of the first set of repeated transmission times and the first list of repeated transmission times by the terminal device to determine the first number of repeated transmissions.

Or, if the network device determines that the terminal device does not need a larger number of repeated transmissions to transmit the Msg3, the network device may not send the first indication information, and if the terminal device does not receive the first indication information, the terminal device may use the second set of repeated transmission times and the second list of repeated transmission times to determine the first number of repeated transmissions. Or, the network device may send the second state of the first indication information to the terminal device, and the second state of the first indication information indicates use of the second set of repeated transmission times and the second list of repeated transmission times by the terminal device to determine the first number of repeated transmissions.

When determining whether the Msg3 needs a larger number of repeated transmissions, the network device actually needs to determine whether the number of repeated transmissions required for transmitting the Msg3 is larger than the existing maximum number of repeated transmissions in R17, that is, the existing number of repeated transmissions in R17 is not enough.

An implementation manner of the determination may be, for example, that the network device determines the coverage enhancement requirements of the terminal device based on quality of a received preamble signal sent by the terminal device, determines the number of repeated transmissions required for transmitting the Msg3 according to the coverage enhancement requirements of the terminal device, and determines whether to send the first indication information to the terminal device according to the number of repeated transmissions required for transmitting the Msg3.

For example, the network device may determine, by receiving the preamble of the terminal device, whether the terminal device needs coverage enhancement or determine that the terminal device needs less coverage enhancement, and in this case, the network device may not send the first indication information to the terminal device, or the network device may send the second state of the first indication information to the terminal device, so that the terminal device does not perform greater coverage enhancement, or determine the first number of repeated transmissions according to the traditional second set of repeated transmission times and second list of repeated transmission times.

Or, if the network device determines that the terminal device requires greater coverage enhancement, the network device may send the first indication information to the terminal device, or the network device may send the first state of the first indication information to the terminal device, so that the terminal device determines the first number of repeated transmissions according to the first set of repeated transmission times and the first list of repeated transmission times.

When determining the first number of repeated transmissions in the first list of repeated transmission times, for example, the terminal device may first acquire second indication information, and then determine the number of repeated transmissions indicated by the second indication information in the first list of repeated transmission times as the first number of repeated transmissions.

The second indication information may be, for example, the RAR or the DCI scrambled by the TC-RNTI described above, and the two most significant bits of the MCS carried therein indicates which number of repeated transmissions in the first list of repeated transmission times is adopted.

Based on the content described above, with reference to a specific example, the implementation that the terminal device uses the first set of repeated transmission times and the first list of repeated transmission times to determine the first number of repeated transmissions is introduced below.

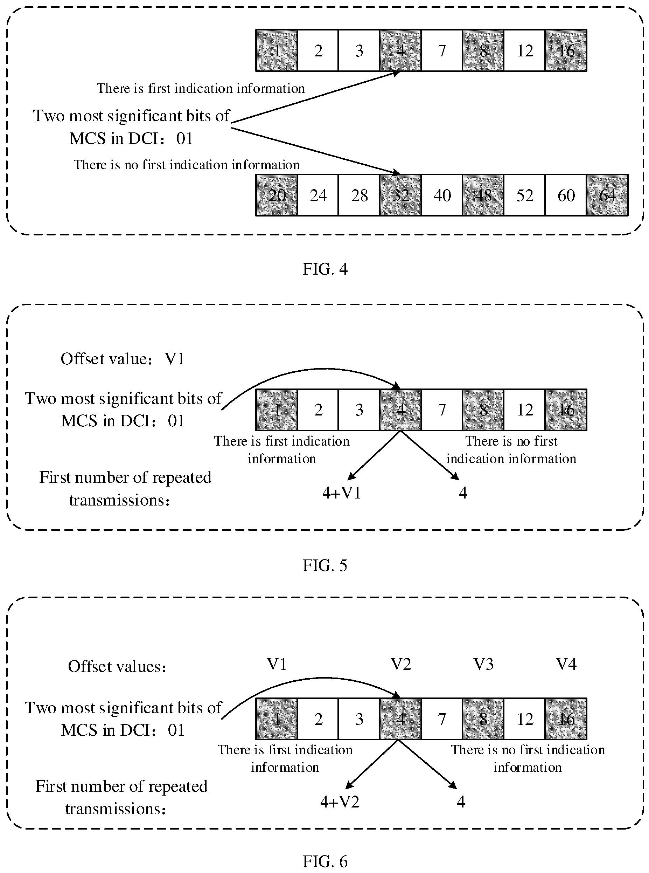

For example, it can be understood in combination with FIG. 4, and FIG. 4 is a schematic implementation diagram I for determining a number of repeated transmissions provided by an embodiment of the present disclosure.

As shown in FIG. 4, it is assumed that the current second set of repeated transmission times includes: 1, 2, 3, 4, 7, 8, 12 and 16, and the second list of repeated transmission times selected from the second set of repeated transmission times includes: 1, 4, 8 and 16.

Also, it is assumed that the current first set of repeated transmission times includes: 20, 24, 28, 32, 40, 48, 52, 60 and 64, and the first list of repeated transmission times selected from the first set of repeated transmission times includes: 20, 32, 48 and 64.

At the same time, assuming that a value of the 2 MSBs of the MCS in the RAR or the DCI scrambled by the TC-RNTI is 01, it means that a second repeated transmissions number in the list of repeated transmission times is adopted, then the second repeated transmissions number corresponding to the first list of repeated transmission times is 32, and the second repeated transmissions number corresponding to the second list of repeated transmission times is 4.

In a possible implementation, if the terminal device receives the first indication information sent by the network device, the terminal device may determine that the network device gives an indication thereto to determine the first number of repeated transmissions by using the first set of repeated transmission times and the first list of repeated transmission times, so the terminal device may determine that the first number of repeated transmissions is 32 determined in the first list of repeated transmission times.

In another possible implementation, if the terminal device does not receive the first indication information sent by the network device, then the terminal device may determine that the network device gives an indication thereto to determine the first number of repeated transmissions by using the second set of repeated transmission times and the second list of repeated transmission times, so the terminal device may determine that the first number of repeated transmissions is 4 determined in the second list of repeated transmission times.

According to the method for determining the number of repeated transmissions provided by the embodiments of the present disclosure, by newly configuring the first set of repeated transmission times and the first list of repeated transmission times, the first set of repeated transmission times may include repeated transmission times larger than those in R17, to ensure that the first list of repeated transmission times can be selected from the first set of repeated transmission times, and then a first repeated transmissions number can be selected from the first list of repeated transmission times, which can effectively meet the greater coverage enhancement requirements. Based on the above introduction, it can be determined that when receiving the first indication information sent by the network device, the terminal device in the embodiments uses the first list of repeated transmission times to determine the number of repeated transmissions, to ensure that the greater repeated transmission requirements can be met. When the terminal device does not receive the first indication information sent by the network device, the terminal device determines the number of repeated transmissions still according to the traditional first list of repeated transmission times, thus effectively ensuring the compatibility with the existing coverage enhancement solutions, and at the same time ensuring that an appropriate number of repeated transmissions can be determined for the terminal device.

An implementation that the first information includes at least one offset value is described below.

Similar to the above introduction, at least one first offset value in the embodiments may be determined by the network device and sent to the terminal device.

For example, the network device may send the at least one offset value to terminal devices in all NTN cells, or the terminal device may only send the at least one offset value to terminal devices in NTN cells that support greater coverage enhancement requirements, or, the network device may also send the at least one offset value to terminal devices in TN cells that support greater coverage enhancement requirements. The specific sending manner may depend on the specific implementation of the network device, which is not limited in the embodiments.

Similarly, the at least one offset value, for example, may be sent in NTN-specific system information (such as SIB19), or may also be sent in any other NTN-specific system information, which is not limited in the embodiments.

It should be noted that the network device still normally configures the second set of repeated transmission times and the second list of repeated transmission times described above, for example, they may be configured through BWP-UplinkCommon.

It can be understood that although the offset value is configured for the terminal device, it does not mean that the offset value is always used every time the terminal device determines the number of repeated transmissions. Instead, an indication is given to the terminal device to use the offset value only when it is determined that the terminal device needs a larger number of repeated transmissions.

Similar to the above introduction, the network device may, for example, determine whether the terminal device needs a larger number of repeated transmissions to transmit the Msg3, and if so, the network device may send the first indication information to the terminal device, and the first indication information indicates use of the offset value by the terminal device to determine the first number of repeated transmissions.

Or, if the network device determines that the terminal device does not need a larger number of repeated transmissions to transmit the Msg3, the network device may not send the first indication information; and if the terminal device does not receive the first indication information, the terminal device may determine the first number of repeated transmissions without using the offset value, that is, determine the first number of repeated transmissions in a traditional way.

When the network device determines whether the Msg3 needs a larger number of repeated transmissions, its implementation manner is similar to that described above, and will not be repeated here.

In this embodiment, if the terminal device needs to determine the first number of repeated transmissions according to the offset value, for example, the terminal device may first acquire third indication information, then determine that in the second list of repeated transmission times, the number of repeated transmissions indicated by the third indication information is a candidate number of repeated transmissions, and then determine the actual first number of repeated transmissions according to the candidate number of repeated transmissions and a first offset value.

In a possible implementation, for example, a sum of the candidate number of repeated transmissions and the first offset value may be determined as the first number of repeated transmissions. Or, a product of the candidate number of repeated transmissions and the first offset value may be determined as the first number of repeated transmissions. The embodiments do not limit the specific operation manner of the candidate number of repeated transmissions and the first offset value, as long as the first number of repeated transmissions larger than the candidate number of repeated transmissions can be obtained after an operation between the candidate number of repeated transmissions and the first offset value, and the specific operation manner can be selected and set according to practical requirements.

Since the at least one offset value is included in the first parameter, the first offset value herein may be understood as an offset value selected from the at least one offset value for determining the actual number of repeated transmissions.

Similar to the above introduction, the third indication information may be, for example, the RAR or the DCI scrambled by the TC-RNTI introduced above, and the carried two most significant bits of the MCS indicate which number of repeated transmissions in the second list of repeated transmission times is adopted.

Based on the content described above, with reference to several specific examples, an introduction is made hereunder to the implementation that the terminal device uses the offset value to determine the first number of repeated transmissions, and various possible implementations of the first offset value are described.

For example, a case that only one offset value is included in the first parameter can be understood in combination with FIG. 5, and FIG. 5 a schematic implementation diagram II for determining a number of repeated transmissions provided by an embodiment of the present disclosure.

As shown in FIG. 5, it is assumed that the current second set of repeated transmission times includes: 1, 2, 3, 4, 7, 8, 12 and 16, and the second list of repeated transmission times selected from the second set of repeated transmission times includes: 1, 4, 8 and 16.

At the same time, assuming that a value of the 2 MSBs of the MCS in the RAR or the DCI scrambled by the TC-RNTI is 01, it means that a second repeated transmissions number in the list of repeated transmission times is adopted, then the second repeated transmissions number corresponding to the second list of repeated transmission times is 4, so it can be determined that the candidate number of repeated transmissions is 4.

Assuming that in this embodiment, only one offset value is included in the first parameter, then the first offset value is the offset value included in the first parameter. For example, in the example of FIG. 5, only an offset value V1 is included in the first parameter, so V1 is the first offset value in this embodiment.

In a possible implementation, if the terminal device receives the first indication information sent by the network device, the terminal device may determine that the network device gives an indication thereto to determine the first number of repeated transmissions by using the offset value, so the terminal device may determine the first number of repeated transmissions according to the candidate number of repeated transmissions and the first offset value. For example, as shown in FIG. 5, a sum of the candidate number of repeated transmissions 4 and the first offset value V1 may be determined as the first number of repeated transmissions, and the first number of repeated transmissions is equal to 4+V1.

In another possible implementation, if the terminal device does not receive the first indication information sent by the network device, then the terminal device may determine that the network device gives an indication thereto to determine the first number of repeated transmissions without using the offset value, so the terminal device may directly determine the candidate number of repeated transmissions as the first number of repeated transmissions. Therefore, referring to FIG. 5, the first number of repeated transmissions is equal to 4.

For another example, a case that the first parameter includes multiple offset values can be understood in combination with FIG. 6, and FIG. 6 is a schematic implementation diagram III for determining a number of repeated transmissions provided by an embodiment of the present disclosure.

As shown in FIG. 6, it is assumed that the current second set of repeated transmission times includes: 1, 2, 3, 4, 7, 8, 12 and 16, and the second list of repeated transmission times selected from the second set of repeated transmission times includes: 1, 4, 8 and 16.

At the same time, assuming that a value of 2 MSBs of the MCS in the RAR or the DCI scrambled by the TC-RNTI is 01, it means that a second repeated transmissions number in the list of repeated transmission times is adopted, then the second repeated transmissions number corresponding to the second list of repeated transmission times is 4, so it can be determined that the candidate number of repeated transmissions is 4.

And assuming that in this embodiment, the first parameter includes multiple offset values, and at the same time, in this embodiment, there are corresponding relationships between the multiple offset values and multiple repeated transmission times in the second list of repetitions. For example, as shown in FIG. 5, the first parameter includes four offset values, namely V1, V2, V3 and V4, and there are four repeated transmissions numbers in the second list of repetitions. Among them, V1 is an offset value corresponding to a repeated transmissions number 1, V2 is an offset value corresponding to a repeated transmissions number 4, V3 is an offset value corresponding to a repeated transmissions number 8, and V4 is an offset value corresponding to a repeated transmissions number 16.

In this case, the first offset value is an offset value corresponding to the candidate number of repeated transmissions. In the current example, the candidate number of repeated transmissions is 4, so it can be determined that the first offset value is V2.

In a possible implementation, if the terminal device receives the first indication information sent by the network device, the terminal device may determine that the network device gives an indication thereto to determine the first number of repeated transmissions by using the offset value, so the terminal device may determine the first number of repeated transmissions according to the candidate number of repeated transmissions and the first offset value. For example, as shown in FIG. 6, a sum of the candidate number of repeated transmissions 4 and the first offset value V2 may be determined as the first number of repeated transmissions, and the first number of repeated transmissions is equal to 4+V2.

In another possible implementation, if the terminal device does not receive the first indication information sent by the network device, the terminal device may determine that the network device gives an indication thereto to determine the first number of repeated transmissions without using the offset value, so the terminal device may directly determine the candidate number of repeated transmissions as the first number of repeated transmissions. Therefore, referring to FIG. 6, the first number of repeated transmissions is equal to 4.

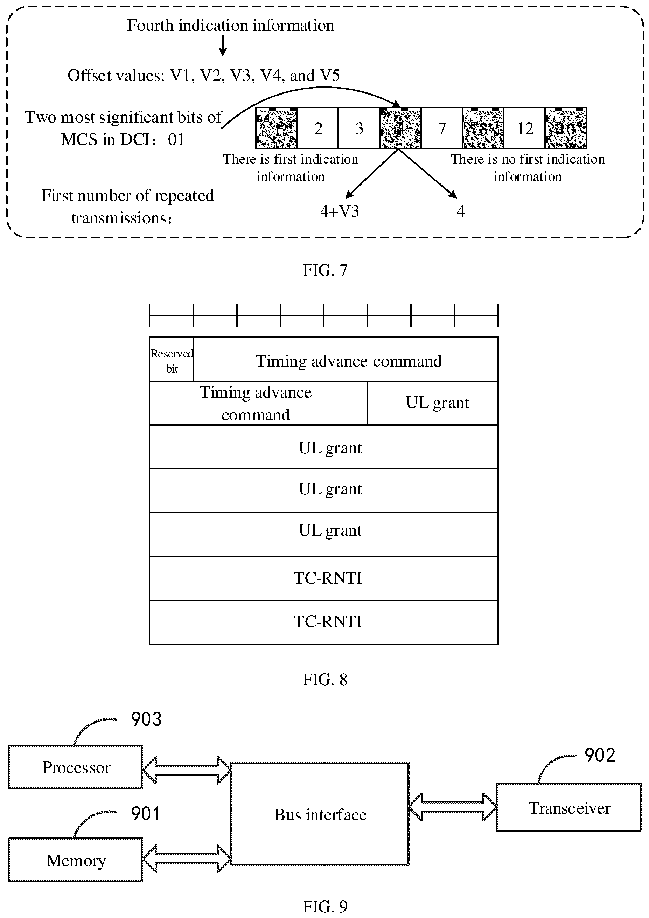

For another example, another case that the first parameter includes multiple offset values can be understood with reference to FIG. 7, and FIG. 7 is a schematic implementation diagram IV for determining a number of repeated transmissions provided by an embodiment of the present disclosure.

As shown in FIG. 7, it is assumed that the current second set of repeated transmission times includes: 1, 2, 3, 4, 7, 8, 12 and 16, and the second list of repeated transmission times selected from the second set of repeated transmission times includes: 1, 4, 8 and 16.

At the same time, assuming that a value of 2 MSBs of the MCS in the RAR or the DCI scrambled by the TC-RNTI is 01, it means that a second repeated transmissions number in the list of repeated transmission times is adopted, then the second repeated transmissions number corresponding to the second list of repeated transmission times is 4, so it can be determined that the candidate number of repeated transmissions is 4.

And assuming that in this embodiment, multiple offset values are included in the first parameter. For example, as shown in FIG. 5, the first parameter includes five offset values, namely V1, V2, V3, V4 and V5.

In this case, the first offset value may be an offset value indicated by fourth indication information. As shown in FIG. 5, for example, if the fourth indication information indicates use of the offset value V3, it can be determined that the first offset value is V3.

In a possible implementation, if the terminal device receives the first indication information sent by the network device, the terminal device may determine that the network device gives an indication thereto to determine the first number of repeated transmissions by using the offset value, so the terminal device may determine the first number of repeated transmissions according to the candidate number of repeated transmissions and the first offset value. For example, as shown in FIG. 7, a sum of the candidate number of repeated transmissions 4 and the first offset value V3 may be determined as the first number of repeated transmissions, and the first number of repeated transmissions is equal to 4+V3.

In another possible implementation, if the terminal device does not receive the first indication information sent by the network device, the terminal device may determine that the network device gives an indication thereto to determine the first number of repeated transmissions without using the offset value, so the terminal device may directly determine the candidate number of repeated transmissions as the first number of repeated transmissions. Therefore, referring to FIG. 7, the first number of repeated transmissions is equal to 4.

For the current implementation of indicating the offset value through the fourth indication information, there may be no corresponding relationships between the multiple offset values included in the first parameter and the multiple repeated transmission times in the second list of repetitions. Or, there may still be corresponding relationships between the multiple offset values included in the first parameter and the multiple repeated transmission times in the second list of repetitions. That is, even if the multiple offset values included in the first parameter have corresponding relationships with the multiple repeated transmission times in the second list of repetitions, the first offset value may still be indicated through the fourth indication information.

According to the method for determining the number of repeated transmissions provided by the embodiments of the present disclosure, by configuring the at least one offset value for the terminal device, when the terminal device needs a larger number of repeated transmissions, an indication may be given to the terminal device to determine the actual first offset value according to the candidate number of repeated transmissions selected from the second list of repeated transmission times and the first offset value, thereby effectively providing a larger number of repeated transmissions, and further meeting greater coverage enhancement requirements. According to the actual coverage requirements of the terminal device, an indication is given to the terminal device about whether to use the offset value to determine the first number of repeated transmissions, thereby effectively ensuring that an appropriate number of repeated transmissions can be determined for the terminal device on the basis of ensuring compatibility with the existing manners for determining the number of repeated transmissions.

On the basis of the various embodiments described above, possible implementations for the terminal device to receive the first indication information are described below.

In a possible implementation, the terminal device, for example, may receive a first message, and the first message carries the first indication information in the embodiments.

The first message is at least one of the following messages: an RAR, DCI scrambled by a TC-RNTI.

The implementation of carrying the first indication information when the first message is the RAR is understood with reference to FIG. 8, and FIG. 8 is a schematic implementation diagram of the first message carrying the first indication information provided by an embodiment of the present disclosure.

As shown in FIG. 8, the RAR includes fields such as a timing advance command (Timing advance command), a UL grant (UL grant), a TC-RNTI, and so on.

There is also a reserved bit in the RAR, for example, the first indication information may be carried in this reserved bit of the RAR.

Or, a CSI request field in the UL grant is not currently used, which may also be used to carry the first indication information.

For example, field content of Grant content in the RAR may be understood with reference to Table 1 below.

**Table 1**

| RAR grant field | Number of bits |
|---|---|
| Frequency hopping flag (Frequency hopping flag) | 1 |
| PUSCH frequency resource allocation (PUSCH frequency resource allocation) | 14, for operations without shared spectrum channel access |
| | 12, for operations with shared spectrum channel access |
| PUSCH time resource allocation (PUSCH time resource allocation) | 4 |
| MCS | 4 |
| TPC command for PUSCH (TPC command for PUSCH) | 3 |
| CSI request (CSI request) | 1 |
| Channel access (ChannelAccess-CPext) | 0, for operations without shared spectrum channel access |
| | 2, for operations with shared spectrum channel access |

Based on the Table 1 above, the CSI request field is not currently used, which may be used to carry the first indication information.

Or, when the first message is the DCI scrambled by the TC-RNTI, there are also multiple reserved bits of bits in DCI Format 0_0 scrambled by the TC-RNTI, such as a 1-bit reserved bit of a New data indicator, a 4-bit reserved bit of a HARQ process number, and a reserved bit of Padding bits.

On the basis of the above introduction, it can be understood that the embodiments do not limit the actual implementation manner of the first message, as long as there is a reserved bit in the first message, which may be used to carry the first indication information in the embodiments. On this basis, the specific implementation manner of the first message can be selected and set according to practical requirements.

In a possible implementation, for example, when the reserved bit in the first message described above is 1, it may mean that the network device gives an indication to the terminal device to determine the number of repeated transmissions by using the first parameter; and when the reserved bit in the first message is 0, it may mean that the network device gives no indication to the terminal device to determine the number of repeated transmissions by using the first parameter.

In an optional implementation, the above-mentioned fourth indication information for indicating the first offset value may also be carried in the first message, and its implementation manner is similar to that of the currently introduced first indication information, which is not repeated here. Or, the fourth indication information may be indication information sent separately, and the embodiments do not limit the specific implementation manner of the fourth indication information.

In addition, the above-mentioned embodiments mainly introduce the related implementations on the terminal device side, actually, the related implementations on the network device side are corresponding thereto, so the specific implementations on the network device side are not repeated in the present disclosure, and for its specific implementations, reference can be made to the introduction of the above embodiments.

To sum up, according to the method for determining the number of repeated transmissions provided by the embodiments of the present disclosure, the first parameter is configured for the terminal device, where the first parameter may include a newly configured set of repeated transmission times and/or list of repeated transmission times, or the first parameter may also include the at least one offset value, and then an indication is given to the terminal device to determine the actual number of repeated transmissions by using the first parameter, so that on the basis of currently configured coverage enhancement technologies, a larger number of repeated transmissions than the existing number of repeated transmissions can be provided for the terminal device, and then higher coverage enhancement requirements can be effectively supported in the NTN scenario, thereby further ensuring that the UE can access the NTN network even under the condition of poor channel quality.

FIG. 9 is a schematic structural diagram of a terminal device provided by an embodiment of the present disclosure. As shown in FIG. 9, the device includes a memory 901, a transceiver 902 and a processor 903.

The memory 901 is configured to store a computer program.

The transceiver 902 is configured to transceive data under control of the processor 903.

The processor 903 is configured to read the computer program in the memory 901 and perform the following operations:
receiving first indication information, where the first indication information is used to indicate use of a first parameter to determine the number of repeated transmissions;
determining a first number of repeated transmissions by using the first parameter.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processor 903 is specifically configured to perform the following operations:
acquiring second indication information;
determining that in the first list of repeated transmission times, a number of repeated transmissions indicated by the second indication information is the first number of repeated transmissions.

In an implementation, the first parameter includes at least one offset value.

In an implementation, the processor 903 is specifically configured to perform the following operations:
acquiring third indication information;
determining that in a second list of repeated transmission times, a number of repeated transmissions indicated by the third indication information is a candidate number of repeated transmissions, where the second list of repeated transmission times is set for a terrestrial network;
determining that a sum of the candidate number of repeated transmissions and a first offset value is the first number of repeated transmissions.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the processor 903 is specifically configured to perform the following operations:
receiving a first message, where the first message carries the first indication information;
where the first message is at least one of the following messages: a random access response message RAR, downlink control information DCI scrambled by a temporary cell radio network temporary identifier TC-RNTI.

It should be noted here that the above device provided by the present disclosure can implement all the method steps implemented by the network device in the above method embodiments, and can achieve the same technical effects. The part of this embodiment and the beneficial effects thereof which are the same as the method embodiments will not be described in detail here.

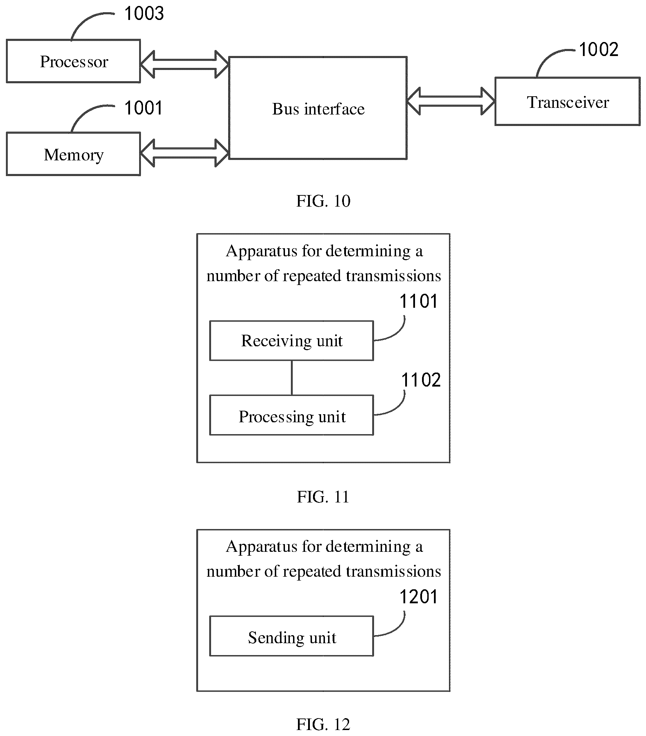

FIG. 10 is a schematic structural diagram of a network device provided by an embodiment of the present disclosure. As shown in FIG. 10, the device includes a memory 1001, a transceiver 1002 and a processor 1003.

The memory 1001 is configured to store a computer program.

The transceiver 1002 is configured to transceive data under control of the processor 1003.

The processor 1003 is configured to read the computer program stored in the memory 1001 and perform the following operations:
sending first indication information, where the first indication information is used to indicate use of a first parameter to determine a number of repeated transmissions;
where the first parameter is used to determine the first number of repeated transmissions.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processor 1003 is further configured to perform the following operations:
sending second indication information, where a number of repeated transmissions in the first list of repeated transmission times indicated by the second indication information is the first number of repeated transmissions.

In an implementation, the first parameter includes at least one offset value.

In an implementation, the processor 1003 is further configured to perform the following operations:
sending third indication information, where a number of repeated transmissions in the second list of repeated transmission times indicated by the third indication information is a candidate number of repeated transmissions, and the second list of repeated transmission times is set for a terrestrial network;
where the first number of repeated transmissions is a sum of the candidate number of repeated transmissions and a first offset value.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the processor 1003 is specifically configured to perform the following operations:
sending a first message, where the first message carries the first indication information;
where the first message is at least one of the following messages: a random access response message RAR, downlink control information DCI scrambled by a temporary cell radio network temporary identifier TC-RNTI.

It should be noted here that the above device provided by the present disclosure can implement all the method steps implemented by the network device in the above method embodiments, and can achieve the same technical effects. The part of this embodiment and the beneficial effects thereof which are the same as the method embodiments will not be described in detail here.

FIG. 11 is a schematic structural diagram I of an apparatus for determining a number of repeated transmissions provided by an embodiment of the present disclosure. As shown in FIG. 11, the apparatus includes:
a receiving unit 1101, configured to receive first indication information, where the first indication information is used to indicate use of a first parameter to determine a number of repeated transmissions;
a processing unit 1102, configured to determine a first number of repeated transmissions by using the first parameter.

In an implementation, the first parameter includes a first set of repeated transmission times and/or a first list of repeated transmission times;
where the first set of repeated transmission times and/or the first list of repeated transmission times are set for a non-terrestrial network.

In an implementation, the processing unit 1102 is specifically configured to:
acquire second indication information;
determine that in the first list of repeated transmission times, a number of repeated transmissions indicated by the second indication information is the first number of repeated transmissions.

In an implementation, the first parameter includes at least one offset value.

In an implementation, the processing unit 1102 is specifically configured to:
acquire third indication information;
determine that in a second list of repeated transmission times, a number of repeated transmissions indicated by the third indication information is a candidate number of repeated transmissions, where the second list of repeated transmission times is set for a terrestrial network;
determine that a sum of the candidate number of repeated transmissions and a first offset value is the first number of repeated transmissions.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the receiving unit 1101 is specifically configured to:
receive a first message, where the first message carries the first indication information;
where the first message is at least one of the following messages: a random access response message RAR, downlink control information DCI scrambled by a temporary cell radio network temporary identifier TC-RNTI.

It should be noted here that the above apparatus provided by the present disclosure can implement all the method steps implemented by the network device in the above method embodiments, and can achieve the same technical effects. The part of this embodiment and the beneficial effects thereof which are same as the method embodiments will not be described in detail here.

FIG. 12 is a schematic structural diagram II of an apparatus for determining a number of repeated transmissions provided by an embodiment of the present disclosure. As shown in FIG. 12, the apparatus includes:
a sending unit 1201, configured to send first indication information, where the first indication information is used to indicate use of a first parameter to determine a number of repeated transmissions;
where the first parameter is used to determine a first number of repeated transmissions.

In an implementation, the first parameter includes a first set of repeated transmission times and/or a first list of repeated transmission times;
where the first set of repeated transmission times and/or the first list of repeated transmission times are set for a non-terrestrial network.

In an implementation, the sending unit 1201 is further configured to:
send second indication information, where a number of repeated transmissions in the first list of repeated transmission times indicated by the second indication information is the first number of repeated transmissions.

In an implementation, the first parameter includes at least one offset value.

In an implementation, the sending unit 1201 is further configured to:
send third indication information, where a number of repeated transmissions in the second list of repeated transmission times indicated by the third indication information is a candidate number of repeated transmissions, and the second list of repeated transmission times is set for a terrestrial network;
where the first number of repeated transmissions is a sum of the candidate number of repeated transmissions and a first offset value.

In an implementation, the first parameter includes an offset value, and the first offset value is the offset value included in the first parameter; or,
the first parameter includes multiple offset values, and the multiple offset values have corresponding relationships with multiple repeated transmission times in the second list of repeated transmission times, and the first offset value is an offset value corresponding to the candidate number of repeated transmissions; or,
the first parameter includes multiple offset values, and the first offset value is an offset value indicated by fourth indication information.

In an implementation, the sending unit 1201 is specifically configured to:
send a first message, where the first message carries the first indication information;
where the first message is at least one of the following messages: a random access response message RAR, downlink control information DCI scrambled by a temporary cell radio network temporary identifier TC-RNTI.

It should be noted here that the above apparatus provided by the present disclosure can implement all the method steps implemented by the network device in the above method embodiments, and can achieve the same technical effects. The part of this embodiment and the beneficial effects thereof which are same as the method embodiments will not be described in detail here.

It should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware or a software functional unit.

If implemented in the form of the software functional unit and sold or used as an independent product, the integrated unit may be stored in a processor-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods described in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk or other media that can store program codes.

An embodiment of the present disclosure further provides a computer-readable storage medium, where the computer-readable storage medium stores a computer program, and the computer program is configured to cause a computer to execute the method executed by the terminal or the network device in the above method embodiments.

The computer-readable storage medium may be any available medium or data storage device that the computer can access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

An embodiment of the present disclosure further provides a computer program product, including a computer program, and when the computer program is executed by a processor, the method executed by the terminal or the network device in the above method embodiments is implemented.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to a magnetic disk storage, an optical storage, etc.) in which computer-usable program codes are included.

The present disclosure is described with reference to flowcharts and/or block diagrams of methods, apparatuses (systems) and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. A method for determining a number of repeated transmissions, **characterized in that** the method is applied to a terminal device, and the method comprises:
receiving first indication information, wherein the first indication information is used to indicate use of a first parameter to determine a number of repeated transmissions;
determining a first number of repeated transmissions by using the first parameter.

2. The method according to claim 1, wherein the first parameter comprises a first set of repeated transmission times and/or a first list of repeated transmission times;
wherein the first set of repeated transmission times and/or the first list of repeated transmission times are set for a non-terrestrial network.

3. The method according to claim 2, wherein determining the first number of repeated transmissions by using the first parameter comprises:
acquiring second indication information;
determining that in the first list of repeated transmission times, a number of repeated transmissions indicated by the second indication information is the first number of repeated transmissions.

4. The method according to claim 1, wherein the first parameter comprises at least one offset value.

5. The method according to claim 4, wherein determining the first number of repeated transmissions by using the first parameter comprises:
acquiring third indication information;
determining that in a second list of repeated transmission times, a number of repeated transmissions indicated by the third indication information is a candidate number of repeated transmissions, wherein the second list of repeated transmission times is set for a terrestrial network;
determining that a sum of the candidate number of repeated transmissions and a first offset value is the first number of repeated transmissions.

6. The method according to claim 5, wherein the first parameter comprises an offset value, and the first offset value is the offset value comprised in the first parameter; or,
the first parameter comprises multiple offset values, and the multiple offset values have corresponding relationships with multiple repeated transmission times in the second list of repeated transmission times, and the first offset value is an offset value corresponding to the candidate number of repeated transmissions; or,
the first parameter comprises multiple offset values, and the first offset value is an offset value indicated by fourth indication information.

7. The method according to any one of claims 1 to 6, wherein receiving the first indication information comprises:
receiving a first message, wherein the first message carries the first indication information;
wherein the first message is at least one of the following messages: a random access response message RAR, downlink control information DCI scrambled by a temporary cell radio network temporary identifier TC-RNTI.

8. A method for determining a number of repeated transmissions, **characterized in that** the method is applied to a network device, and the method comprises:
sending first indication information, wherein the first indication information is used to indicate use of a first parameter to determine a number of repeated transmissions;
wherein the first parameter is used to determine a first number of repeated transmissions.

9. The method according to claim 8, wherein the first parameter comprises a first set of repeated transmission times and/or a first list of repeated transmission times;
wherein the first set of repeated transmission times and/or the first list of repeated transmission times are set for a non-terrestrial network.

10. The method according to claim 9, further comprising:
sending second indication information, wherein a number of repeated transmissions in the first list of repeated transmission times indicated by the second indication information is the first number of repeated transmissions.

11. The method according to claim 8, wherein the first parameter comprises at least one offset value.

12. The method according to claim 11, further comprising:
sending third indication information, wherein a number of repeated transmissions in a second list of repeated transmission times indicated by the third indication information is a candidate number of repeated transmissions, and the second list of repeated transmission times is set for a terrestrial network;
wherein the first number of repeated transmissions is a sum of the candidate number of repeated transmissions and a first offset value.

13. The method according to claim 12, wherein the first parameter comprises an offset value, and the first offset value is the offset value comprised in the first parameter; or,
the first parameter comprises multiple offset values, and the multiple offset values have corresponding relationships with multiple repeated transmission times in the second list of repeated transmission times, and the first offset value is an offset value corresponding to the candidate number of repeated transmissions; or,
the first parameter comprises multiple offset values, and the first offset value is an offset value indicated by fourth indication information.

14. The method according to any one of claims 8 to 13, wherein sending the first indication information comprises:
sending a first message, wherein the first message carries the first indication information;
wherein the first message is at least one of the following messages: a random access response message RAR, downlink control information DCI scrambled by a temporary cell radio network temporary identifier TC-RNTI.

15. A terminal device, **characterized by** comprising a memory, a transceiver, and a processor:
wherein the memory is configured to store a computer program; the transceiver is configured to transceive data under control of the processor; the processor is configured to read the computer program in the memory and perform the following operations:
receiving first indication information, wherein the first indication information is used to indicate use of a first parameter to determine a number of repeated transmissions;
determining a first number of repeated transmissions by using the first parameter.

16. The device according to claim 15, wherein the first parameter comprises a first set of repeated transmission times and/or a first list of repeated transmission times;
wherein the first set of repeated transmission times and/or the first list of repeated transmission times are set for a non-terrestrial network.

17. The device according to claim 16, wherein the processor is specifically configured to perform the following operations:
acquiring second indication information;
determining that in the first list of repeated transmission times, a number of repeated transmissions indicated by the second indication information is the first number of repeated transmissions.

18. The device according to claim 15, wherein the first parameter comprises at least one offset value.

19. The device according to claim 18, wherein the processor is specifically configured to perform the following operations:
acquiring third indication information;
determining that in a second list of repeated transmission times, a number of repeated transmissions indicated by the third indication information is a candidate number of repeated transmissions, wherein the second list of repeated transmission times is set for a terrestrial network;
determining that a sum of the candidate number of repeated transmissions and a first offset value is the first number of repeated transmissions.

20. The device according to claim 19, wherein the first parameter comprises an offset value, and the first offset value is the offset value comprised in the first parameter; or,
the first parameter comprises multiple offset values, and the multiple offset values have corresponding relationships with multiple repeated transmission times in the second list of repeated transmission times, and the first offset value is an offset value corresponding to the candidate number of repeated transmissions; or,
the first parameter comprises multiple offset values, and the first offset value is an offset value indicated by fourth indication information.

21. The device according to any one of claims 15 to 20, wherein the processor is specifically configured to perform the following operations:
receiving a first message, wherein the first message carries the first indication information;
wherein the first message is at least one of the following messages: a random access response message RAR, downlink control information DCI scrambled by a temporary cell radio network temporary identifier TC-RNTI.

22. A network device, **characterized by** comprising a memory, a transceiver, and a processor:
wherein the memory is configured to store a computer program; the transceiver is configured to transceiver data under control of the processor; the processor is configured to read the computer program in the memory and perform the following operations:
sending first indication information, wherein the first indication information is used to indicate use of a first parameter to determine a number of repeated transmissions;
wherein the first parameter is used to determine a first number of repeated transmissions.

23. The device according to claim 22, wherein the first parameter comprises a first set of repeated transmission times and/or a first list of repeated transmission times;
wherein the first set of repeated transmission times and/or the first list of repeated transmission times are set for a non-terrestrial network.

24. The device according to claim 23, wherein the processor is further configured to perform the following operations:
sending second indication information, wherein a number of repeated transmissions in the first list of repeated transmission times indicated by the second indication information is the first number of repeated transmissions.

25. The device according to claim 22, wherein the first parameter comprises at least one offset value.

26. The device according to claim 25, wherein the processor is further configured to perform the following operations:
sending third indication information, wherein a number of repeated transmissions in a second list of repeated transmission times indicated by the third indication information is a candidate number of repeated transmissions, and the second list of repeated transmission times is set for a terrestrial network;
wherein the first number of repeated transmissions is a sum of the candidate number of repeated transmissions and a first offset value.

27. The device according to claim 26, wherein the first parameter comprises an offset value, and the first offset value is the offset value comprised in the first parameter; or,
the first parameter comprises multiple offset values, and the multiple offset values have corresponding relationships with multiple repeated transmission times in the second list of repeated transmission times, and the first offset value is an offset value corresponding to the candidate number of repeated transmissions; or,
the first parameter comprises multiple offset values, and the first offset value is an offset value indicated by fourth indication information.

28. The device according to any one of claims 22 to 27, wherein the processor is specifically configured to perform the following operations:
sending a first message, wherein the first message carries the first indication information;
wherein the first message is at least one of the following messages: a random access response message RAR, downlink control information DCI scrambled by a temporary cell radio network temporary identifier TC-RNTI.

29. An apparatus for determining a number of repeated transmissions, **characterized in that** the apparatus is applied to a terminal device, and the apparatus comprises:
a receiving unit, configured to receive first indication information, wherein the first indication information is used to indicate use of a first parameter to determine a number of repeated transmissions;
a processing unit, configured to determine a first number of repeated transmissions by using the first parameter.

30. The apparatus according to claim 29, wherein the first parameter comprises a first set of repeated transmission times and/or a first list of repeated transmission times;
wherein the first set of repeated transmission times and/or the first list of repeated transmission times are set for a non-terrestrial network.

31. The apparatus according to claim 30, wherein the processing unit is specifically configured to:
acquire second indication information;
determine that in the first list of repeated transmission times, a number of repeated transmissions indicated by the second indication information is the first number of repeated transmissions.

32. The apparatus according to claim 29, wherein the first parameter comprises at least one offset value.

33. The apparatus according to claim 32, wherein the processing unit is specifically configured to:
acquire third indication information;
determine that in a second list of repeated transmission times, a number of repeated transmissions indicated by the third indication information is a candidate number of repeated transmissions, wherein the second list of repeated transmission times is set for a terrestrial network;
determine that a sum of the candidate number of repeated transmissions and a first offset value is the first number of repeated transmissions.

34. An apparatus for determining a number of repeated transmissions, **characterized in that** the apparatus is applied to a network device, and the apparatus comprises:
a sending unit, configured to send first indication information, wherein the first indication information is used to indicate use of a first parameter to determine a number of repeated transmissions;
wherein the first parameter is used to determine a first number of repeated transmissions.

35. The apparatus according to claim 34, wherein the first parameter comprises a first set of repeated transmission times and/or a first list of repeated transmission times;
wherein the first set of repeated transmission times and/or the first list of repeated transmission times are set for a non-terrestrial network.

36. The apparatus according to claim 35, wherein the sending unit is further configured to:
send second indication information, wherein a number of repeated transmissions in the first list of repeated transmission times indicated by the second indication information is the first number of repeated transmissions.

37. The apparatus according to claim 34, wherein the first parameter comprises at least one offset value.

38. The apparatus according to claim 37, wherein the sending unit is further configured to:
send third indication information, wherein a number of repeated transmissions in a second list of repeated transmission times indicated by the third indication information is a candidate number of repeated transmissions, and the second list of repeated transmission times is set for a terrestrial network;
wherein the first number of repeated transmissions is a sum of the candidate number of repeated transmissions and a first offset value.

39. A processor-readable storage medium storing a computer program, **characterized in that** the computer program is configured to cause the processor to execute the method according to any one of claims 1 to 14.
